# EUROPEAN PATENT SPECIFICATION

(11) **EP 2 991 936 B1**
(45) Date of publication and mention of the grant of the patent: **24.05.2017**
(21) Application number: 14723125.2
(22) Date of filing: 16.04.2014
(51) Int. Cl.: C03B 9/34, B22C 9/00, B22C 9/06, B22D 17/22, B23P 15/24, B29C 33/70, B29C 33/74, C03B 9/347, C03B 11/06

(54) **PROCESS FOR THE RECOVERY OF MOULDS FOR THE MANUFACTURING OF GLASS PARTS AND CONTAINERS**
VERFAHREN ZUR RÜCKGEWINNUNG VON FORMEN ZUR HERSTELLUNG VON GLASTEILEN UND -BEHÄLTERN
PROCESSUS DE RÉCUPÉRATION DE MOULES POUR LA FABRICATION DE PIÈCES ET DE CONTENANTS EN VERRE

(30) Priority: 29.04.2013 ES 201330620
(43) Date of publication of application: 09.03.2016
(73) Proprietor: Construcciones Y Reparaciones Mecánicas Sivó, S.L., 02660 Caudete (ES)
(72) Inventor: SIVÓ ROMERO, José, E-02660 Caudete (ES)
(74) Representative: Oficina Ponti, SLP
(86) International application number: PCT/IB2014/060764
(87) International publication number: WO 2014/177965

(56) References cited:
- WO-A1-2009/090622
- WO-A1-2009/104585
- JP-A- 2010 214 385

## Description

The present invention relates to a process for the recovery of moulds for the manufacturing of glass parts and containers.

### Background of the invention

The known moulds for the manufacturing of glass parts and containers are of cast iron with a graphite-rich specific alloy or a bronze alloy to facilitate demoulding. Due to the prolonged use of said moulds, the surface layer which defines the template with the form of the part to be produced deteriorates so that the mould is no longer useful.

Before the end of the useful life of the mould there is the possibility of repairing it with the purpose of continuing to work with said mould during a certain additional time. However, the number of repairs that the mould allows is limited and once the mould can no longer be repaired it is considered that its useful life has finished and, in consequence, it is discarded.

Currently the manufacturing of moulds for glass parts and containers is programmed for a certain useful life, bearing in mind the material and the quantity of parts that can be cast with that mould. Due to this, when the life of the mould comes to an end it is discarded and a new mould is manufactured to continue with the production.

The main problem of reusing the mould is the loss of properties of the material due to fatigue from working at a temperature, so that the mould would not be useful even if repaired. Therefore, the need for a mould recovery process, which allows its useful life to be extended, is evident.WO2009/090622 discloses a method for extending the lifespan of a metal cavity mould by machining and depositing a layer of molten filler metal onto the machined surface.

### Description of the invention

The objective of the process for the recovery of moulds for the manufacturing of glass parts and containers of the present invention is to resolve the drawbacks of the processes known in the state of the art, providing a simple and effective method which makes it possible to considerably lengthen the useful life of said moulds.

The process for the recovery of moulds for the manufacturing of glass parts and containers, object of the present invention, is of the type wherein said mould comprises a moulding surface defined by a template with the form of the part to be produced, and external surfaces provided for the securing of the mould to a pouring or injection machine of the glass material to be moulded, and the material of the moulding surface being deteriorated by the continued use of the mould. The process is characterized in that it comprises the following stages:
a) cleaning the layer of deteriorated material of the moulding surface by a machining process which makes it possible to remove said layer copying a template of the part to be produced, to thus obtain a surface layer of material clean of impurities; and
b) filling with welding and machining the external surfaces for securing the mould to the pouring or injection machine, to recover the original measurements of the mould.

Thanks to the process of the invention the life of the mould is substantially lengthened to continue with the production, thus obtaining a significant reduction in costs.

This removal operation of the layer of deteriorated material makes it possible to clean the surface material in permanent contact with the glass material which is being cast, and thus regenerate the properties of the material of the mould which becomes clean from impurities in this surface area.

Preferably, during stage a) the deteriorated layer is removed copying the original template of the part to be produced, or optionally a template other than the original is copied and the incorporation of generic or customized engravings is even provided.

Advantageously, the machining process of stage a) is mainly performed by lathes, milling machines or any type of suitable machinery in accordance with the form of the template of the part to be produced.

Preferably, the removal depth of the deteriorated material to clean is between 0.1 mm and 3 mm.

Optionally, a surface hardening treatment of the mould is later performed.

Therefore, once the mould recovery process has been performed, it is possible to perform a thermal treatment or a coating of the surface layer of the mould, to thus achieve greater surface hardness further increasing, if possible, the useful life of the mould after this process.

### Brief description of the drawings

For a better understanding of all that disclosed, drawings are attached wherein, diagrammatically and only as a non-limitative example, a practical embodiment is represented of the process for the recovery of moulds for the manufacturing of glass parts and containers of the invention, wherein:
figure 1 is an elevational view of a semi-part of the mould used, showing the template of the part to be moulded and the areas which must be repaired; and
figure 2 is a plan view of the closed mould.

### Description of a preferred embodiment

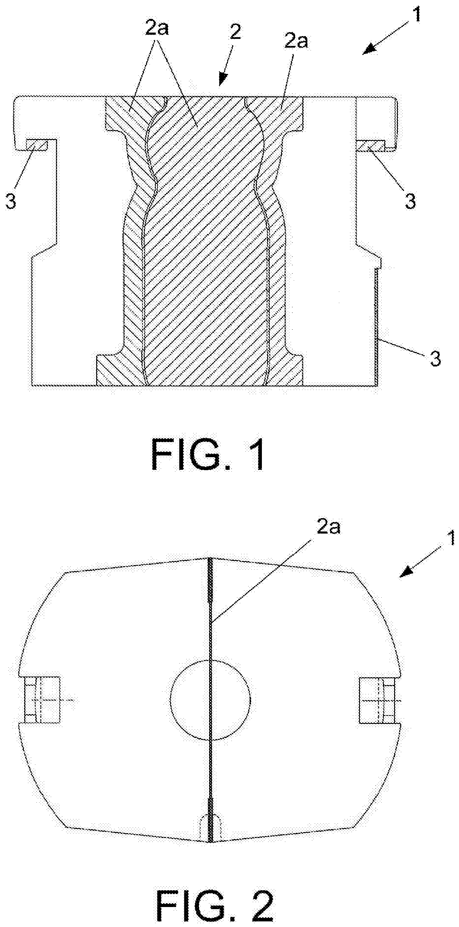

As can be observed in figures 1 and 2, the type of mould 1 used for the manufacturing of glass parts and containers comprises a moulding surface 2 defined by a template with the form of the part to be produced, and external surfaces 3 provided for the securing of the mould 1 to a pouring or injection machine (not represented) of the glass material to be moulded. Due to continued use of the mould 1, the material of the moulding surface 2 deteriorates and needs to be repaired.

The process for the recovery of a mould 1 for the manufacturing of glass parts and containers, of the present invention, comprises the following stages:
- cleaning the layer of deteriorated material 2a of the moulding surface 2 by a machining process which makes it possible to remove said layer 2a copying a template of the part to be produced, to thus obtain a surface layer of material clean of impurities; and
- filling with welding and machining the external surfaces 3 for securing the mould 1 to the pouring or injection machine, to recover the original measurements of the mould 1.

Thanks to the process of the invention the life of the mould 1 is substantially lengthened to continue with the production, thus obtaining a significant reduction in costs.

This removal operation of the layer of deteriorated material 2a makes it possible to clean the surface material in permanent contact with the glass material which is being cast, and thus regenerate the properties of the material of the mould 1 which becomes clean from impurities in this surface area.

The machining process can be mainly performed using lathes, milling machines or any type of suitable machinery in accordance with the form of the template of the part to be produced.

The removal depth of the deteriorated material 2a to clean is between 0.1 mm and 3 mm, although it may be more or less depending on the requirements in each case.

A surface hardening treatment of the mould 1 can later be performed. In this case, once the mould recovery process has been performed 1, it is possible to perform a thermal treatment or a coating of the surface layer of the mould 1, to thus achieve greater surface hardness further increasing, if possible, the useful life of the mould 1 after this process.

It should be highlighted that the process of the invention could also be performed before the end of its useful life, if circumstances so required, for example, to copy to a different template or for any other necessary reason.

Despite the fact that reference has been made to a specific embodiment of the invention, it is evident for a person skilled in the art that numerous variations and modifications can be introduced in the process for the recovery of a mould for the manufacturing of glass parts and containers described, and that all the details mentioned can be replaced by other technically equivalent ones, without departing from the scope of protection defined by the attached claims.

## Claims

1. Process for the recovery of moulds (1) for the manufacturing of glass parts and containers, of the type wherein said mould (1) comprises a moulding surface (2) defined by a template with the form of the part to be produced, and external surfaces (3) provided for the securing of the mould (1) to a pouring or injection machine of the glass material to be moulded, and the material of the moulding surface being deteriorated by the continued use of the mould (1), **characterized in that** said process comprises the following stages:
a) cleaning the layer of deteriorated material (2a) of the moulding surface (2) by a machining process which makes it possible to remove said layer (2a) copying a template of the part to be produced, to thus obtain a surface layer of material clean of impurities; and
b) filling with welding and machining the external surfaces (3) for securing the mould (1) to the pouring or injection machine, to recover the original measurements of the mould (1).

2. Process, according to claim 1, wherein during stage a) the deteriorated layer is removed copying the original template of the part to be produced, or optionally a template other than the original is copied and the incorporation of generic or customized engravings is even provided.

3. Process, according to claim 1, wherein the machining process of stage a) is mainly performed by lathes, milling machines or any type of suitable machinery in accordance with the form of the template of the part to be produced.

4. Process, according to claim 1, wherein the removal depth of the deteriorated material (2a) to clean is between 0.1 mm and 3 mm.

5. Process, according to claim 1, wherein a surface hardening treatment of the mould (1) is later performed.

## Patentansprüche

1. Verfahren zur Rückgewinnung von Formen (1) zur Fertigung von Glasteilen und -behältern, wobei das Verfahren von dem Typ ist, bei dem die Form (1) eine Formgebungsoberfläche (2), die durch eine Schablone mit der Gestalt des herzustellenden Teils definiert ist, und Außenoberflächen (3) aufweist, die für die Befestigung der Form (1) an einer Gieß- oder Spritzmaschine des zu formenden Glasmaterials bereitgestellt sind, und wobei sich das Material der Formgebungsoberfläche durch die fortlaufende Verwendung der Form (1) verschlechtert, **dadurch gekennzeichnet, dass** das Verfahren die folgenden Schritte aufweist:
a) Reinigen der Schicht aus verschlechtertem Material (2a) der Formgebungsoberfläche (2) durch ein maschinelles Bearbeitungsverfahren, wodurch ermöglicht wird, die Schicht (2a) zu entfernen, wobei eine Schablone des herzustellenden Teils kopiert wird, um so eine Oberflächenschicht aus Material ohne Unreinheiten zu erhalten; und
b) Füllen der Außenoberflächen (3) mit Schweißen und maschinelles Bearbeiten derselben zum Befestigen der Form (1) an der Gieß- oder Spritzmaschine, um die ursprünglichen Abmessungen der Form (1) rückzugewinnen.

2. Verfahren gemäß Anspruch 1, bei dem während Schritt a) die verschlechterte Schicht entfernt wird, wobei die ursprüngliche Schablone des herzustellenden Teils kopiert wird oder optional eine andere Schablone als die ursprüngliche kopiert wird und sogar die Einarbeitung von allgemeinen oder kundenspezifischen Gravuren bereitgestellt wird.

3. Verfahren gemäß Anspruch 1, bei dem das maschinelle Bearbeitungsverfahren aus Schritt a) hauptsächlich mittels Drehbänken, Fräsmaschinen oder jeglicher Art von geeigneter maschineller Ausrüstung gemäß der Gestalt der Schablone des herzustellenden Teils durchgeführt wird.

4. Verfahren gemäß Anspruch 1, bei dem die Entferntiefe des zu säubernden verschlechterten Materials (2a) zwischen 0,1 mm und 3 mm liegt.

5. Verfahren gemäß Anspruch 1, bei dem später eine Oberflächenhärtungsbehandlung der Form (1) durchgeführt wird.

## Revendications

1. Procédé de récupération de moules (1) pour la fabrication de pièces en verre et de conteneurs, du type dans lequel ledit moule (1) comprend une surface de moulage (2) définie par un modèle de la forme de la pièce à fabriquer, et des surfaces externes (3) présentes pour fixer le moule (1) à une machine verseuse ou à injection du matériau de verre devant être moulé, le matériau de ladite surface de moulage étant détérioré par l'usage continu du moule (1), **caractérisé en ce que** ledit procédé comprend les étapes suivantes :
a) nettoyage de la couche de matériau détérioré (2a) de la surface de moulage (2) par un procédé d'usinage rendant possible le retrait de ladite couche (2a) copiant un modèle de la pièce à fabriquer, pour ainsi obtenir une couche de surface d'un matériau dépourvu de toute impureté ; et
b) remplissage de soudure et usinage des surfaces externes (3) pour fixer le moule (1) à la machine verseuse ou à injection, afin de retrouver les mesures originales du moule (1).

2. Procédé, selon la revendication 1, dans lequel durant l'étape a) la couché détériorée est retirée en copiant le modèle original de la pièce à fabriquer, ou, optionnellement, un modèle autre que l'original est copié et l'incorporation de gravures génériques ou personnalisées est également prévue.

3. Procédé, selon la revendication 1, dans lequel le procédé d'usinage de l'étape a) est principalement réalisé par des lattes, des fraiseuses ou tout type d'équipement adapté conformément à la forme du modèle de la pièce à fabriquer.

4. Procédé, selon la revendication 1, dans lequel la profondeur de retrait du matériau détérioré (2a) à nettoyer est comprise entre 0,1 mm et 3 mm.

5. Procédé, selon la revendication 1, dans lequel un traitement durcisseur de surface est par la suite appliqué au moule (1).
